# EUROPÄISCHE PATENTSCHRIFT

(11) **EP 2 716 950 B1**
(45) Veröffentlichungstag und Bekanntmachung des Hinweises auf die Patenterteilung: **12.07.2017**
(21) Anmeldenummer: 12187100.8
(22) Anmeldetag: 03.10.2012
(51) Int. Cl.: F16L 5/04, A62C 2/06

(54) **Brandschutzelement**
Fire retardant element
Elément ignifuge

(43) Veröffentlichungstag der Anmeldung: 09.04.2014
(73) Patentinhaber: Geberit International AG, 8645 Jona (CH)
(72) Erfinder: Bürgi, Paul, 8730 Uznach (CH); Wolff, Oliver, 8832 Wollerau (CH)
(74) Vertreter: Frischknecht, Harry Ralph

(56) Entgegenhaltungen:
- EP-A1- 1 512 434
- DE-A1- 4 321 307
- DE-A1- 10 323 589

## Beschreibung

### TECHNISCHES GEBIET

Die vorliegende Erfindung betrifft ein Brandschutzelement nach dem Oberbegriff von Anspruch 1.

### STAND DER TECHNIK

Aus dem Stand der Technik sind Brandschutzelemente für Rohre, welche sich durch Öffnungen in Wänden oder Böden hindurch erstrecken, bekannt.

Zum Beispiel zeigt die EP 1 512 434 ein derartiges Element. Nach der technischen Lehre der EP 1 512 434 wird ein Rohr durch eine Öffnung in einem Boden geführt und ist im Bereich der Öffnung mit einen Mantel aus einem Intumeszenzmaterial umgeben. Im Brandfall quillt dieses Material auf und verschliesst den Zwischenraum zwischen Rohr und Öffnung.

Das Rohr wird in einer Ausführungsform über einen Lagerring in der Öffnung gehalten, wobei der Lagerring zwischen einem Flansch des Rohrs und einem Absatz der Öffnung gehalten ist. In einer anderen Ausführungsform ist in der Öffnung eine Hülse eingesetzt, welche ebenfalls einen Absatz für die Kontaktierung des Lagerrings aufweist.

Diese Art von Lagerung weist einige Nachteile auf. Der Lagerring muss, um die Position des Rohrs zu halten, eine gewisse Härte aufweisen, was dazu führt, dass akustischen Schwingungen über den Lagerring auf den Boden übertragen werden. Die Gewichtskraft führt bei diesen Ausführungsformen zu einem wirksamen Drehmoment, weil die Gewichtskraft zu einer Drehbewegung um den Haltepunkt führen kann. Die Halterung muss daher aus statischen Gründen über ein Mindestmass an integraler Festigkeit verfügen, was zwangsläufig zu einer Schallkopplung zwischen Bauteil und Baukörper führt.

Zudem ist die mechanische Lagerung innerhalb der Öffnung relativ aufwändig, weil einerseits eine Stufenbohrung im Beton hergestellt werden muss, oder andererseits eine Hülse in Öffnung eingesetzt werden muss.

DE 103 23 589 A1 offenbart ein Brandschutzelement, dessen intumeszierende Masse gleichzeitig schalldämmend wirken soll, jedoch aufgrund des direkten Kontaktes zwischen Rohr, intumeszierender Hülse und Wand noch relativ wenig schalldämmend wirken kann.

Andere aus dem Stand der Technik bekannte Ausführungsformen verwenden stets Rohrschellen zur Befestigung des Rohres. Somit werden Körperschallbrücken gebildet, was sich negativ auf den Schallpegel auswirkt.

### DARSTELLUNG DER ERFINDUNG

Ausgehend von diesem Stand der Technik liegt der Erfindung eine Aufgabe zugrunde, eine Brandschutzanordnung anzugeben, welche die Nachteile des Standes der Technik überwindet. Insbesondere soll die akustische Übertragung von Schwingungen am Rohr möglichst vermieden oder stark reduziert werden.

Diese Aufgabe löst der Gegenstand von Anspruch 1. Demgemäss dient eine Brandschutzvorrichtung zur Durchführung eines Rohrleitungsabschnittes einer Rohrleitung durch eine in einem flächigen Gebäudeelement angeordnete Gebäudeöffnung, welche sich von einer ersten Oberfläche zu einer weiteren Oberfläche des Gebäudeelementes erstreckt. Die Brandschutzvorrichtung umfasst einen Rohrleitungsabschnitt mit einem sich zum Rohrleitungsabschnitt winklig erstreckenden Flansch, wobei der Rohrleitungsabschnitt über den Flansch mit dem Gebäudeelement in Verbindung steht, und ein zwischen dem Rohrleitungsabschnitt und der Gebäudeöffnung angeordnetes Brandschutzelement, das den Rohrleitungsabschnitt auf seiner Mantelfläche vollständig umgibt und im Brandfall bei Wärmeeinwirkung aufquillt. Die Brandschutzvorrichtung umfasst weiter ein Schallentkoppelungselement, welches auf einer Auflagefläche des Flansches aufliegt und mit einer Oberfläche des Gebäudeelementes in Kontakt bringbar ist, wobei sich die Auflagefläche parallel zur besagten Oberfläche über den Durchmesser der Gebäudeöffnung hinaus erstreckt. Die Auflagefläche weist also einen grösseren Durchmesser als die Gebäudeöffnung auf.

Die Schallwellen, die sich entlang der Mittelachse der Rohrleitung erstrecken, werden anstatt wie beispielsweise über die Rohrschellen und Wand auf den Boden jetzt lediglich über das Schallentkoppelungselement auf das Gebäudeelement übertragen. Dabei werden die Schallwellen aufgrund des flächigen Kontaktes und der Ausrichtung der Auflagefläche parallel zur besagten Oberfläche in ihrer ursprünglichen Richtung übertragen. Hierdurch wird die Übertragung des Schalles reduziert und es kommt zu geringerer Geräuschbildung im Gebäudeelement selbst.

Vorzugsweise verläuft der Rohrleitungsabschnitt in der Vertikalen und die Oberflächen des Gebäudeelementes in der Horizontalen. Die Mittelachse der Rohrleitung steht also in der Vertikalen. Die Richtung der akustischen Entkoppelung und die Richtung der Gewichtskraft der Rohrleitung verlaufen somit parallel, was den Vorteil hat, dass das Entkoppelungselement prinzipiell beliebig weich ausgestaltet werden kann, da kein Drehmoment wirksam wird, was die Statik beeinflussen könnte. Das macht die akustische Entkoppelung ebenfalls prinzipiell beliebig effizient. Im Falle eines wirkenden Drehmomentes wäre ein Mindestmass an Steifheit des Entkoppelements notwendig, um die statische Funktion der Halterung zu gewährleisten.

Vorzugsweise liegt das Schallentkoppelungselement flächig an der Auflagefläche des Flansches und flächig auf der besagten Oberfläche des Gebäudeelementes auf, wodurch eine besonders gute Entkoppelung gewährleistet wird. Der Zwischenraum zwischen der Auflagefläche des Flansches und der Oberfläche des Gebäudeelementes ist dabei vollständig durch das Schallentkoppelungselement ausgefüllt. Zudem kann bei der vertikalen Einbaulage die Gewichtskraft gut durch das Schallentkoppelungselement aufgenommen und auf die Oberfläche des Gebäudeelementes übertragen werden.

Das Schallentkoppelungselement ist am Flansch vorzugsweise stoffschlüssig befestigt. Weiter kann das Schallentkoppelungselement auch mit der Oberfläche des Gebäudeelementes stoffschlüssig in Verbindung stehen. Durch die stoffschlüssige Verbindung kann auch auf weitere Befestigungsmittel verzichtet werden. Der Rohrleitungsabschnitt steht ausschliesslich über das Schallentkoppelungselement mit dem Gebäudeelement in Verbindung. Das Schallentkoppelungselement bildet also die einzige mechanische Verbindung zwischen dem Rohrleitungsabschnitt und dem Gebäudeelement, wodurch die Schallentkoppelung zwingend über das Schallentkoppelungselement erfolgen muss. Diese Art der Verbindung hat den Vorteil, dass die Schallentkoppelung einfacher und genauer dimensionierbar und auch kontrollierbar ist. Zudem wird der Schall nicht über andere Elemente übertragen.

Zusätzlich oder alternativ kann das Schallentkoppelungselement auch formschlüssig am Rohrleitungsabschnitt in Kontakt mit dem Flansch gehalten werden.

Vorzugsweise ist das Schallentkoppelungselement ein Strukturkörper aus einem elastischen Material, wobei das elastische Material bevorzugt ein elastischer Kunststoff ist, welcher eine Shore-A-Härte im Bereich von 30° und 60° aufweist. Besonders bevorzugt ist das Schallentkoppelungselement ein Dämmschlauch.

Alternativ besteht das Schallentkoppelungselement aus einem Schaum, welcher auf die Auflagefläche des Flansches oder die Oberfläche des Gebäudeelementes aufspritzbar ist. Der Schaum wird dabei vor der Montage aufgespritzt und verbindet sich vorzugsweise stoffschlüssig mit den entsprechenden Flächen.

Der Flansch erstreckt sich bevorzugt senkrecht zur Mittelachse des Rohrleitungsabschnittes. Weiter erstreckt sich der Flansch dabei vollständig und ohne Unterbruch um den Rohrleitungsabschnitt herum, wobei der Flansch einen Durchmesser aufweist, welcher grösser ist als der Durchmesser der Gebäudeöffnung.

Das Schallentkoppelungselement weist vorzugsweise die Gestalt eines Rings oder eines Hohlzylinders auf, dessen Ringbreite bzw. Mantelstärke grösser ist, als dessen Höhe entlang der Mittelachse gesehen.

Die Ringbreite bzw. die Mantelstärke ist vorzugsweise um einen Faktor im Bereich von 1 bis 10 grösser ist als die Höhe.

Besonders bevorzugt erstreckt sich das Schallentkoppelungselement über die gesamte zum Gebäudeelement hin orientierte Auflagefläche des Flansches. Alternativ weist das Schallentkoppelungselement einen grösseren Durchmesser als der Flansch auf und erstreckt sich in Richtung der Mittelachse gesehen seitlich über den Flansch hinaus.

Vorzugsweise ist der Flansch am Rohrleitungsabschnitt angeformt oder der Flansch ist an einem den Rohrleitungsabschnitt umgebenden Halteteil angeformt. Das Halteteil hält dabei den Rohrleitungsabschnitt und steht mit diesem mechanisch in Verbindung.

Weitere Ausführungsformen sind in den abhängigen Ansprüchen angegeben.

Eine Gebäudeanordnung umfasst ein flächiges Gebäudeelement mit einer im Gebäudeelement angeordneten Gebäudeöffnung, welche sich von einer ersten Oberfläche zu einer weiteren Oberfläche des Gebäudeelementes erstreckt und eine Brandschutzvorrichtung nach obiger Beschreibung, wobei die Brandschutzanordnung mit dem Schallentkoppelungselement, das auf einer Auflagefläche des Flansches aufliegt, mit einer der Oberflächen des Gebäudeelementes in Kontakt steht, wobei sich der Flansch parallel zur besagten Oberfläche über den Durchmesser der Gebäudeöffnung erstreckt.

Die Mittelachse der Gebäudeöffnung verläuft vorzugsweise in der Vertikalen, so dass der Rohrleitungsabschnitt ebenfalls in der Vertikalen liegt. Folglich erstreckt sich dann das Gebäudeelement bzw. seine parallel zueinander verlaufenden Oberflächen in der Horizontalen. Der Rohrleitungsabschnitt wird hier über seine Gewichtskraft zur Öffnung positioniert, weshalb eine Befestigung desselben, zum Beispiel mit Schrauben, entfällt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigt:

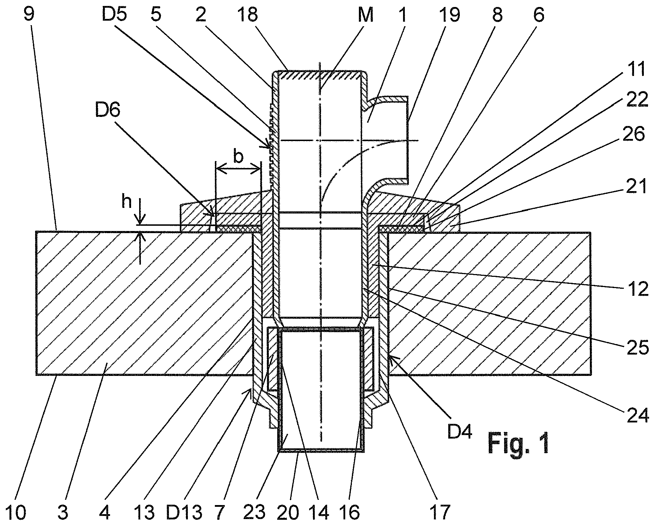

- Fig. 1: eine Schnittdarstellung einer Brandschutzanordnung gemäss einer ersten Ausführungsform.

### BESCHREIBUNG BEVORZUGTER AUSFÜHRUNGSFORMEN

In der Figur 1 wird eine erste Ausführungsform einer Brandschutzvorrichtung 1 gezeigt. Die Brandschutzvorrichtung 1 dient der Durchführung eines Rohrleitungsabschnittes 5 einer Rohrleitung 2 durch eine in einem flächigen Gebäudeelement 3 angeordnete Gebäudeöffnung 4. Das flächige Gebäudeelement 3 kann zum Beispiel eine Decke, ein Boden oder eine Wand sein. Das flächige Gebäudeelement 3 weist eine erste Oberfläche 9 und eine weitere Oberfläche 10 auf, welche parallel und beabstandet zur ersten Oberfläche 9 verläuft. Die Gebäudeöffnung 4 erstreckt sich vollständig durch das Gebäudeelement 3 von der ersten Oberfläche 9 zur weiteren Oberfläche 10 hindurch.

Die Brandschutzanordnung umfasst im Wesentlichen einen Rohrleitungsabschnitt 5 mit einem sich zum Rohrleitungsabschnitt 5 winklig erstreckenden Flansch 6. Der Rohrleitungsabschnitt 5 ist vorzugsweise zylinderförmig ausgebildet und weist einen Rohrinnenraum 23 auf. Der Rohrinnenraum 23 wird durch eine Seitenwand 16, die sich um eine Mittelachse M herum erstreckt, begrenzt. Im Rohrinnenraum 23 kann eine Flüssigkeit, wie beispielsweise Abwasser geführt werden. Der Flansch 6 erstreckt sich winklig, hier senkrecht zur Mittelachse M.

Weiter umfasst die Brandschutzvorrichtung ein zwischen dem Rohrleitungsabschnitt 5 und der Gebäudeöffnung 4 angeordnetes Brandschutzelement 7, das den Rohrleitungsabschnitt 5, insbesondere die Seitenwand 16, vollständig umgibt und im Brandfall bei Wärmeeinwirkung entsprechend aufquillt und den Zwischenraum zwischen Rohrleitungsabschnitt 5 und Gebäudeöffnung 4 ausfüllt. Solche Brandschutzelemente 7 sind aus dem Stand der Technik bekannt.

Weiter umfasst die Brandschutzvorrichtung ein Schallentkoppelungselement 8. Das Schallentkoppelungselement 8 ist zwischen dem Flansch 6 und der Oberfläche 9 des Gebäudeelementes 3 angeordnet. Das Schallentkoppelungselement 8 steht hier in Kontakt mit einer Auflagefläche 11 des Flansches 6. Der Flansch 6 erstreckt sich dabei, insbesondere mit der Auflagefläche 11, parallel zur besagten Oberfläche 9. Zudem weist der Flansch 6 einen Durchmesser D6 auf, welcher über den Durchmesser D4 der Gebäudeöffnung 4 hinausragt. Der Flansch 6 und somit die Auflagefläche 11 weisen also einen grösseren Durchmesser auf als die Gebäudeöffnung 4. Über den Flansch 6 wird der Rohrleitungsabschnitt 5 bzw. die Rohrleitung 2 am Gebäudeelement 3 entsprechend abgestützt. Das Schallentkoppelungselement 8 erstreckt sich also im Wesentlichen rechtwinklig zur Mittelachse M.

Das Schallentkoppelungselement 8 liegt vorzugsweise flächig auf der Auflagefläche 11 am Flansch 6 und flächig auf der besagten Oberfläche 9 des Gebäudeelementes 3 auf. Unter flächig wird verstanden, dass ein direkter Kontakt über eine grössere Fläche zwischen Schallentkoppelungselement 8 und Auflagefläche 11 bzw. Oberfläche 9 bereitgestellt wird. Hierdurch kann eine besonders effiziente Entkoppelung des Schalls und eine gute Aufnahme der Gewichtskraft der Rohrleitung geschaffen werden.

Weiter erstreckt sich der Flansch 6 im Wesentlichen senkrecht zur Mittelachse M des Rohrleitungsabschnittes 5. Der Flansch 6 erstreckt sich dabei in besonders bevorzugten Ausführungsformen vollständig um den Rohrleitungsabschnitt 5 herum. Wie oben erläutert weist der Flansch 6 einen Durchmesser D6 auf, welche grösser ist als der Durchmesser D4 der Gebäudeöffnung 4. Der Flansch 6 erstreckt sich dabei von der Aussenseite der Seitenwand 16 des Rohrleitungsabschnittes 5.

In der Ausführungsform nach der Figur 1 ist der Flansch 6 an einem zylindrischen Halteteil 12 angeformt, welches kraftschlüssig und/oder stoffschlüssig mit dem Rohrleitungsabschnitt 5 in Verbindung steht. Somit wird die Gewichtskraft des Rohrleitungsabschnittes 5 über diese Verbindung auf das Halteteil 12 und somit auf den Flansch 6 übertragen. Dieses Halteteil 12 lagert dabei den Rohrleitungsabschnitt 5 bezüglich des Gebäudeelementes 3. Das Halteteil 12 erstreckt sich mit einer zylindrischen Öffnung 24 entlang der Mittelachse M und der Rohrleitungsabschnitt 5 erstreckt sich durch die zylindrische Öffnung 24 hindurch. In dieser Öffnung wird auch die Verbindung zwischen Rohrleitungsabschnitt 5 und Halteteil 12 bereitgestellt.

In einer Alternativen hier nicht gezeigten Ausführungsform ist der Flansch 6 direkt an der Aussenseite der Seitenwand 16 des Rohrleitungsabschnittes 5 angeformt.

Das Schallentkoppelungselement 8 weist vorzugsweise die Gestalt eines Ringes auf. Die Ringbreite b ist dabei grösser als die Höhe h des Rings entlang der Mittelachse M gesehen. Mit anderen Worten kann auch gesagt werden, dass das Schallentkoppelungselement 8 die Gestalt eines Hohlzylinders aufweist, dessen Mantelstärke b grösser ist, als dessen Höhe b entlang der Mittelachse M gesehen.

Besonders bevorzugt ist die Ringbreite b bzw. die Mantelstärke b um einen Faktor im Bereich von 1 bis 10 grösser als die Höhe h.

Das Schallentkoppelungselement 8 erstreckt sich über die gesamte zum Gebäudeelement 3 hin orientierte Auflagefläche 11 des Flansches 6. Der Zwischenraum zwischen Auflagefläche 11 und Gebäudeelement 3 ist also vollständig mit dem Schallentkoppelungselement 8 ausgefüllt. Besonders vorteilhaft ist es auch, wenn sich das Schallentkoppelungselement 8 in Richtung der Mittelachse M gesehen über den Flansch 6 seitlich hinaus erstreckt. Das Schallentkoppelungselement 8 weist also einen grösseren Durchmesser auf als der Flansch 6. In anderen Ausführungsformen kann das Schallentkoppelungselement 8 aber auch den gleichen oder einen kleineren Durchmesser als der Flansch 6 aufweisen.

Vorzugsweise ist das Schallentkoppelungselement 8 am Flansch 6 stoffschlüssig befestigt. Dabei kann das Schallentkoppelungselement 8 bspw. am Flansch 6 aufgeklebt sein oder, falls das Schallentkoppelungselement 8 aus einem gummiartigen Werkstoff ist, direkt am Flansch 6 aufvulkanisiert sein.

Das Schallentkoppelungselement 8 kann aber auch formschlüssig am Rohrableitungsabschnitt 5 in Kontakt mit dem Flansch 6 gehalten werden. Hierbei weist das Schallentkoppelungselement 8 vorzugsweise einen gleichen Durchmesser auf, wie der Rohrleitungsabschnitt 5 im Bereich des Flansches 6, sodass das Schallentkoppelungselement 8 zum Rohrleitungsabschnitt 5 geklemmt werden kann.

Das Schallentkoppelungselement 8 kann dabei verschiedenartig ausgebildet sein. Beispielsweise ist es, wie in der Figur 1 gezeigt, denkbar, dass das Schallentkoppelungselement 8 ein Strukturkörper aus einem elastischen Material ist. Alternativ kann das Schallentkoppelungselement 8 auch aus einem Schaum bestehen, welcher auf dem Flansch 6 oder die Oberfläche 9, 10 des Gebäudeelementes 3 während der Montage der Brandschutzanordnung aufspritzbar ist.

Vorzugsweise umfasst die Brandschutzvorrichtung 1 hier weiter ein optionales Trennelement mit Trennstreifen 13. Der Trennstreifen 13 umgibt dabei den Rohrleitungsabschnitt 5 um die Rohrleitung 2 herum. Der Trennstreifen 13 umgibt dabei vorzugsweise das Brandschutzelement 7 und sichert dieses dadurch zum Rohrleitungsabschnitt 5.

Der Trennstreifen 13 schliesst sich dabei dem Schallentkoppelungselement 8 an und erstreckt sich durch die gesamte Gebäudeöffnung 4 hindurch. Weiter umgibt der Trennstreifen 13 das Brandschutzelement 7, sodass dieses mit dem Trennstreifen 13 zum Rohrleitungsabschnitt 5 gesichert wird.

Das Brandschutzelement 7 liegt vorzugsweise auf der Mantelfläche 14 des Rohrleitungsabschnittes 5 auf. Das Brandschutzelement 7 ist aus einem Intumeszenzmaterial, welches bei Hitzeeinwirkung aufquillt. Der Aussendurchmesser des Rohrleitungsabschnittes 5 oder gegebenenfalls der Aussendurchmesser D13 des Trennstreifens 13 ist im Bereich der Gebäudeöffnung 4 kleiner als der Durchmesser der Gebäudeöffnung 4. Somit herrscht zwischen der Mantelfläche 14 des Rohrabschnittes 5 und der Seitenwand 25 der Gebäudeöffnung 14 bzw. zwischen der Mantelfläche 14 und der Innenseite 17 des ggf. vorhandenen Trennstreifens 13 ein Spiel, welches dann im Brandfall durch Aufquellen des Brandschutzelementes 7 entsprechend ausgefüllt wird. Das Spiel ist zudem vorteilhaft, weil hierdurch eine Schallübertragung ausgeschlossen werden kann. Somit steht der Rohrleitungsabschnitt 5 ausschliesslich über das Schallentkoppelungselement 8 mit dem Gebäudeelement 3 in Verbindung.

Der Rohrleitungsabschnitt 5 ist hier als Verzweigungsstück mit zwei Eingängen 18, 19 und einem Ausgang 20 gezeigt. Der Rohrleitungsabschnitt 5 kann aber auch nur einen Eingang 18 und einen Ausgang 20 aufweisen. An den Eingängen 18, 19 und am Ausgang 20 lassen sich weitere Rohrleitungsteile anschliessen.

Weiter umfasst die Vorrichtung ein optionales Schutzelement 21. Das Schutzelement 21 erstreckt sich über den Flansch 6 und das Schallentkoppelungselement 8. Das Schutzelement 21 steht dabei auf der Oberfläche 9 des Gebäudeelementes 3 auf und bildet einen Aufnahmeraum 22, in welchem Flansch 6 und das Schallentkoppelungselement 8 angeordnet sind.

### BEZUGSZEICHENLISTE

- 1: Brandschutzvorrichtung
- 2: Rohrleitung
- 3: Gebäudeelement
- 4: Gebäudeöffnung
- 5: Rohrleitungsabschnitt
- 6: Flansch
- 7: Brandschutzelement
- 8: Schallentkoppelungselement
- 9: Oberfläche
- 10: Oberfläche
- 11: Auflagefläche
- 12: Halteteil
- 13: Trennstreifen
- 14: Mantelfläche, Aussenseite
- 16: Seitenwand
- 17: Innenseite
- 18: Eingang
- 19: Eingang
- 20: Ausgang
- 21: Schutzelement
- 22: Aufnahmeraum
- 23: Rohrinnenraum
- 24: zylindrische Öffnung
- 25: Seitenwand der Gebäudeöffnung
- 26: Zwischenraum

## Patentansprüche

1. Brandschutzvorrichtung (1) zur Durchführung eines Rohrleitungsabschnittes (5) einer Rohrleitung (2) durch eine in einem flächigen Gebäudeelement (3) angeordnete Gebäudeöffnung (4), welche sich von einer ersten Oberfläche (9) zu einer weiteren Oberfläche (10) des Gebäudeelementes (3) erstreckt, umfassend
einen Rohrleitungsabschnitt (5) mit einem sich zum Rohrleitungsabschnitt (5) winklig erstreckenden Flansch (6), wobei der Rohrleitungsabschnitt (5) über den Flansch (6) mit dem Gebäudeelement (3) in Verbindung steht, und
ein zwischen dem Rohrleitungsabschnitt (5) und der Gebäudeöffnung (4) angeordnetes Brandschutzelement (7), das den Rohrleitungsabschnitt (5) auf seiner Mantelfläche (14) vollständig umgibt und im Brandfall bei Wärmeeinwirkung aufquillt, **dadurch gekennzeichnet,**
**dass** die Brandschutzvorrichtung weiter ein Schallentkoppelungselement (8) umfasst, welches auf einer Auflagefläche (11) des Flansches (6) aufliegt und mit einer Oberfläche (9, 10) des Gebäudeelementes (3) in Kontakt bringbar ist, wobei sich die Auflagefläche (11) parallel zur besagten Oberfläche (9) über den Durchmesser (D4) der Gebäudeöffnung (4) hinaus erstreckt,
und **dass** der Rohrleitungsabschnitt (5) ausschliesslich über das Schallentkoppelungselement (8) mit dem Gebäudeelement (3) in Verbindung steht.

2. Brandschutzvorrichtung nach Anspruch 1, **dadurch gekennzeichnet, dass** das Schallentkoppelungselement (8) flächig an der Auflagefläche des Flansches (6) und flächig auf der besagten Oberfläche (9) des Gebäudeelementes (3) aufliegt, wobei das Schallentkoppelungselement (8) den Zwischenraum (26) zwischen Flansch (6) und Oberfläche (9) vollständig ausfüllt.

3. Brandschutzvorrichtung nach Anspruch 1 oder 2, **dadurch gekennzeichnet, dass** sich der Flansch (6) senkrecht zur Mittelachse (M) des Rohrleitungsabschnittes (5) erstreckt und sich vollständig ohne Unterbruch ringförmig um den Rohrleitungsabschnitt (5) herum erstreckt, wobei der Flansch (6) einen Durchmesser (D6) aufweist, welcher grösser ist als der Durchmesser (D4) der Gebäudeöffnung (4).

4. Brandschutzvorrichtung nach einem der vorhergehenden Ansprüche, **dadurch gekennzeichnet, dass** das Schallentkoppelungselement (8) mit dem Flansch (6) und/oder mit der Oberfläche (9) des Gebäudeelementes stoffschlüssig in Verbindung steht.

5. Brandschutzvorrichtung nach einem der vorhergehenden Ansprüche, **dadurch gekennzeichnet, dass** das Schallentkoppelungselement (8) ein Strukturkörper aus einem elastischen Material, insbesondere aus einem elastischen Kunststoff, ist, welcher eine Shore-A-Härte im Bereich von 30° und 60° aufweist, oder dass das Schallentkoppelungselement (8) aus einem Schaum besteht, welcher auf die Auflagefläche (11) des Flansch (6) oder die Oberfläche (9, 10) des Gebäudeelementes (3) aufspritzbar ist, wobei sich der Schaum stoffschlüssig mit der Oberfläche (9, 10) und der Auflagefläche (11) verbindet.

6. Brandschutzvorrichtung nach einem der vorhergehenden Ansprüche, **dadurch gekennzeichnet, dass** das Schallentkoppelungselement (8) die Gestalt eines Rings oder eines Hohlzylinders aufweist, dessen Ringbreite (b) bzw. Mantelstärke (b) grösser ist, als dessen Höhe (H) entlang der Mittelachse (M) des Rings bzw. des Hohlzylinders gesehen.

7. Brandschutzvorrichtung nach Anspruch 6, **dadurch gekennzeichnet, dass** die Ringbreite (b) bzw. die Mantelstärke (b) um einen Faktor im Bereich von 1 bis 10 grösser ist als die Höhe (H).

8. Brandschutzvorrichtung nach einem der vorhergehenden Ansprüche, **dadurch gekennzeichnet, dass** sich das Schallentkoppelungselement (8) über die gesamte zum Gebäudeelement (3) hin orientierte Auflagefläche (11) des Flansches (6) erstreckt.

9. Brandschutzvorrichtung nach einem der vorhergehenden Ansprüche, **dadurch gekennzeichnet, dass** das Schallentkoppelungselement (8) einen grösseren Durchmesser als der Flansch (6) aufweist und sich in Richtung der Mittelachse (M) gesehen seitlich über den Flansch (6) hinaus erstreckt.

10. Brandschutzvorrichtung nach einem der vorhergehenden Ansprüche, **dadurch gekennzeichnet, dass** der Flansch (6) am Rohrleitungsabschnitt (5) angeformt ist oder dass der Flansch (6) an einem den Rohrleitungsabschnitt (5) umgebenden Halteteil (12) angeformt ist, wobei das Halteteil (12) fest mit dem Rohrleitungsabschnitt in Verbindung steht, so dass eine Kraft in Richtung der Mittelachse auf das Halteteil (12) übertragbar wird.

11. Brandschutzvorrichtung nach einem der vorhergehenden Ansprüche, **dadurch gekennzeichnet, dass** der Rohrleitungsabschnitt (5) durch einen um die Rohrleitung (2) herum verlaufenden Trennstreifen (13) umgeben ist, wobei der Trennstreifen (13) vorzugsweise das Brandschutzelement (7) umgibt.

12. Brandschutzvorrichtung Anspruch 11, **dadurch gekennzeichnet, dass** der Trennstreifen (13) sich dem Schallentkoppelungselement (8) anschliesst und sich durch die gesamte Gebäudeöffnung (4) hindurch erstreckt.

13. Brandschutzvorrichtung nach einem der vorhergehenden Ansprüche, **dadurch gekennzeichnet, dass** der Aussendurchmesser (D5) des Rohrleitungsabschnittes (5) oder ggf. der Aussendurchmesser (D13) des Trennstreifens (13) im Bereich der Gebäudeöffnung (4) kleiner ist als der Durchmesser (D4) der Gebäudeöffnung (4), so dass zwischen der Aussenseite (14) des Rohrabschnittes bzw. des Trennstreifens und der Seitenwand (16) der Gebäudeöffnung (4) Spiel vorhanden ist.

14. Brandschutzvorrichtung nach einem der vorhergehenden Ansprüche, **dadurch gekennzeichnet, dass** die Vorrichtung weiterhin ein Schutzelement (21) umfasst, welches sich über den Flansch (6) und das Schallentkoppelungselement (8) erstreckt.

15. Gebäudeanordnung umfassend ein flächiges Gebäudeelement (3) mit einer im Gebäudeelement (3) angeordnete Gebäudeöffnung (4), welche sich von einer ersten Oberfläche (9) zu einer weiteren Oberfläche (10) des Gebäudeelementes (3) erstreckt und eine Brandschutzvorrichtung nach einem der vorhergehenden Ansprüche, wobei die Brandschutzanordnung mit dem Schallentkoppelungselement (8), das auf einer Auflagefläche (11) des Flansches (6) aufliegt, mit einer Oberflächen (9, 10) des Gebäudeelementes (3) in Kontakt steht, wobei sich der Flansch (6) parallel zur besagten Oberfläche (9) über den Durchmesser (D4) der Gebäudeöffnung (4) erstreckt, wobei das Schallentkoppelungselement (8) zwischen der Auflagefläche (11) des Flansches (6) und einer der Oberflächen (9, 10) des Gebäudeelementes (3) angeordnet ist und den Zwischenraum (26) zwischen Auflagefläche (11) und der Oberfläche (9, 10) vorzugsweise vollständig ausfüllt.

## Claims

1. A fire protection device (1) for passing a pipe segment (5) of a piping (2) through a building opening (4) that is arranged in a flat building element (3) and extends from a first surface (9) to another surface (10) of the building element (3), comprising
a pipe segment (5) with a flange (6) extending at an angle relative to the pipe segment (5), wherein the pipe segment (5) is connected by way of the flange (6) with the building element (3), and
a fire protection element (7) arranged between the pipe segment (5) and building opening (4), which completely envelops the pipe segment (5) on its jacket surface (14), and swells upon exposure to heat in the event of a fire, **characterized in that**
the fire protection device further comprises a sound decoupling element (8), which lies on a locating surface (11) of the flange (6), and can be brought into contact with a surface (9, 10) of the building element (3), wherein the locating surface (11) extends parallel to the aforesaid surface (9) beyond the diameter (D4) of the building opening (4) and
**in that** the pipe segment (5) is connected with the building element (3) exclusively by way of the sound decoupling element (8).

2. The fire protection device according to claim 1, **characterized in that** the sound decoupling element (8) flatly abuts against the locating surface of the flange (6) and flatly abuts the aforesaid surface (9) of the building element (3), wherein the sound decoupling element (8) completely fills the gap (26) between the flange (6) and surface (9).

3. The fire protection device according to claim 1 or 2, **characterized in that** the flange (6) extends perpendicular to the central axis (M) of the pipe segment (5), and annularly extends completely and uninterruptedly around the pipe segment (5), wherein the flange (6) exhibits a diameter (D6) that exceeds the diameter (D4) of the building opening (4).

4. The fire protection device according to one of the preceding claims, **characterized in that** the sound decoupling element (8) is adhesively connected with the flange (6) and/or with the surface (9) of the building element.

5. The fire protection device according to one of the preceding claims, **characterized in that** the sound decoupling element (8) is a structural body made out of a flexible material, in particular a flexible plastic, which exhibits a Shore A hardness ranging between 30° and 60°, or that the sound decoupling element (8) consists of foam, which can be sprayed onto the locating surface (11) of the flange (6) or the surface (9, 10) of the building element (3), wherein the foam forms an adhesive bond with the surface (9, 10) and the locating surface (11).

6. The fire protection device according to one of the preceding claims, **characterized in that** the sound decoupling element (8) is configured like a ring or hollow cylinder, whose ring width (b) or jacket thickness (b) is greater than its height (H) as viewed along the central axis (M).

7. The fire protection device according to claim 7, **characterized in that** the ring width (b) or jacket thickness (b) is 1 to 10 times greater than the height (H).

8. The fire protection device according to one of the preceding claims, **characterized in that** the sound decoupling element (8) extends over the entire locating surface (11) of the flange (6) oriented toward the building element (3).

9. The fire protection device according to one of the preceding claims, **characterized in that** the sound decoupling element (8) exhibits a larger diameter than the flange (6), and extends laterally beyond the flange (6) as viewed in the direction of the central axis (M).

10. The fire protection device according to one of the preceding claims, **characterized in that** the flange (6) is moulded onto the pipe segment (5), or the flange (6) is moulded onto a retaining part (12) that envelops the pipe segment (5), wherein the retaining part (12) is rigidly connected with the pipe segment, so that a force is transmitted to the retaining part (12) in the direction of the central axis.

11. The fire protection device according to one of the preceding claims, **characterized in that** the pipe segment (5) is enveloped by a separating strip (13) that runs around the piping (2), wherein the separating strip (13) preferably envelops the fire protection element (7).

12. The fire protection device according to claim 11, **characterized in that** the separating strip (13) adjoins the sound decoupling element (8), and extends through the entire building opening (4).

13. The fire protection device according to one of the preceding claims, **characterized in that** the outer diameter (D5) of the pipe segment (5) or potentially the outer diameter (D13) of the separating strip (13) is smaller in the area of the building opening (4) than the diameter (D4) of the building opening (4), so that a clearance exists between the exterior side (14) of the pipe segment or separating strip and the lateral wall (16) of the building opening (4).

14. The fire protection device according to one of the preceding claims, **characterized in that** the device further encompasses a protection element (21), which extends over the flange (6) and sound decoupling element (8).

15. A building arrangement encompassing a flat building element (3) with a building opening (4) that is situated in the building element (3) and extends from a first surface (9) to another surface (10) of the building element (3), and a fire protection device according to one of the preceding claims, wherein the fire protection arrangement with the sound decoupling element (8) lying on a locating surface (11) of the flange (6) is in contact with one of the surfaces (9, 10) of the building element (3), with the flange (6) extending parallel to the aforesaid surface (9) over the diameter (D4) of the building opening (4), wherein the sound decoupling element (8) is arranged between the locating surface (11) of the flange (6) and one of the surfaces (9, 10) of the building element (3), and preferably completely fills the gap (26) between the locating surface (11) and the surface (9, 10).

## Revendications

1. Dispositif de protection contre l'incendie (1) pour faire passer une section de tuyau (5) d'un tuyau (2) à travers une ouverture de bâtiment (4) disposée dans un élément de bâtiment plat (3), lequel s'étend à partir d'une première surface (9) à une autre surface (10) de l'élément de bâtiment (3), comprenant
une section de tuyau (5) ayant une bride (6) s'étendant de manière angulaire par rapport à la section de tuyau (5), dans lequel la section de tuyau (5) est en connexion avec l'élément de bâtiment (3) à travers la bride (6), et
un élément de protection contre l'incendie (7) disposé entre la section de tuyau (5) et l'ouverture de bâtiment (4), qui entoure la section de tuyau (5) complètement sur la totalité de sa surface d'enveloppe (14) et qui se gonfle en cas d'incendie en raison de la chaleur, **caractérisé en ce que**,
le dispositif de protection contre l'incendie comprend en outre un élément de découplage acoustique (8) qui repose sur une surface d'appui (11) de la bride (6) et qui peut être mis en contact avec une surface (9, 10) de l'élément de bâtiment (3), où la surface d'appui (11) s'étend de manière parallèle à ladite surface (9) au-delà du diamètre (D4) de l'ouverture de bâtiment (4), et que la section de tuyau (5) est en contact avec l'élément de bâtiment (3) exclusivement à travers l'élément de découplage acoustique (8).

2. Dispositif de protection contre l'incendie selon la revendication 1, **caractérisé en ce que** l'élément de découplage acoustique (8) repose de manière plane sur la surface d'appui de la bride (6) et de manière plane sur ladite surface (9) de l'élément de bâtiment (3), où l'élément de découplage acoustique (8) remplit l'espace (26) entre la bride (6) et la surface (9) de manière complète.

3. Dispositif de protection contre l'incendie selon la revendication 1 ou 2, **caractérisé en ce que** la bride (6) s'étend de manière perpendiculaire par rapport à l'axe central (M) de la section de tuyau (5) et s'étend complètement sans interruption de manière annulaire autour de la section de tuyau (5), où la bride (6) présente un diamètre (D6) lequel est supérieur au diamètre (D4) de l'ouverture de bâtiment (4).

4. Dispositif de protection contre l'incendie selon une des revendications précédentes, **caractérisé en ce que** l'élément de découpage acoustique (8) est en connexion par liaison de matière avec la bride (6) et/ou avec la surface (9) de l'élément de bâtiment.

5. Dispositif de protection contre l'incendie selon une des revendications précédentes, **caractérisé en ce que** l'élément de découplage acoustique (8) est un corps structurel en matériau élastique, en particulier en résine élastique, lequel a une dureté Shore A dans le domaine de 30° et 60°, où que l'élément de découplage acoustique (8) est constitué d'une mousse, laquelle peut être pulvérisée sur la surface d'appui (11) de la bride (6) ou la surface (9, 10) de l'élément de bâtiment (3), où la mousse s'attache par liaison de matière à la surface (9, 10) et à la surface d'appui (11).

6. Dispositif de protection contre l'incendie selon une des revendications précédentes, **caractérisé en ce que** l'élément de découplage acoustique (8) présente une forme d'anneau ou de cylindre creux, dont la largeur de l'anneau (b) respectivement l'épaisseur de l'enveloppe (b) est supérieure à son hauteur (H), vu le long de l'axe central (M) de l'anneau respectivement du cylindre creux.

7. Dispositif de protection contre l'incendie selon la revendication 6, **caractérisé en ce que** la largeur de l'anneau (b) respectivement l'épaisseur de l'enveloppe (b) est supérieure à la hauteur (H) d'un facteur dans le domaine de 1 à 10.

8. Dispositif de protection contre l'incendie selon une des revendications précédentes, **caractérisé en ce que** l'élément de découplage acoustique (8) s'étend sur la surface d'appuis (11) de la bride (6) entière orientée vers l'élément de bâtiment (3).

9. Dispositif de protection contre l'incendie selon une des revendications précédentes, **caractérisé en ce que** l'élément de découplage acoustique (8) présente un diamètre supérieur à celui de la bride (6) et s'étend de manière latérale au-delà de la bride (6), vu en direction de l'axe central (M)

10. Dispositif de protection contre l'incendie selon une des revendications précédentes, **caractérisé en ce que** la bride (6) est formée sur la section de tuyau (5) ou que la bride (6) est formée sur une pièce de retenue (12) entourant la section de tuyau (5), où la pièce de retenue (12) est en connexion fixe avec la section de tuyau, de sorte à rendre une force en direction de l'axe central transférable sur la pièce de retenue (12).

11. Dispositif de protection contre l'incendie selon une des revendications précédentes, **caractérisé en ce que** la section de tuyau (5) est entourée d'une bande de séparatrice (13) s'étendant autour du tuyau (2), où la bande séparatrice (13) entoure préférablement l'élément de protection contre l'incendie (7).

12. Dispositif de protection contre l'incendie selon la revendication 11, **caractérisé en ce que** la bande séparatrice (13) se raccorde à l'élément de découplage acoustique (8) et s'étend à travers l'ouverture de bâtiment (4) entière.

13. Dispositif de protection selon une des revendications précédentes, **caractérisé en ce que** le diamètre extérieur (D5) de la section de tuyau (5) ou le cas échéant du diamètre extérieur (D13) de la bande séparatrice (13) est inférieur dans le domaine de l'ouverture de bâtiment (4) au diamètre (D4) de l'ouverture de bâtiment (4), de sorte qu'un jeu existe entre le côté extérieur (14) de la section de tuyau respectivement de la bande séparatrice et la paroi latérale (16) de l'ouverture de bâtiment (4).

14. Dispositif de protection contre l'incendie selon une des revendications précédentes, **caractérisé en ce que** le dispositif comprend en outre un élément de protection (21), lequel s'étend sur la bride (6) et l'élément de découplage acoustique (8).

15. Agencement de bâtiment comprenant un élément de bâtiment (3) plat ayant une ouverture de bâtiment (4) disposée dans l'élément de bâtiment (3), lequel s'étend à partir d'une première surface (9) à une autre surface (10) de l'élément de bâtiment (3) et un dispositif de protection contre l'incendie selon une des revendications précédentes, où l'agencement de protection contre l'incendie est en contact avec l'élément de découplage acoustique (8) qui repose sur une surface d'appui (11) de la bride (6), avec une des surfaces (9, 10) de l'élément de bâtiment (3), où la bride (6) s'étend de manière parallèle à ladite surface (9) au-delà du diamètre (D4) de l'ouverture de bâtiment (4), où l'élément de découplage acoustique (8) est disposé entre la surface d'appui (11) de la bride et une des surfaces (9, 10) de l'élément de bâtiment (3) et remplit l'espace (26) entre la surface d'appui (11) et la surface (9, 10) préférablement de manière complète.
